# EUROPÄISCHE PATENTSCHRIFT

(11) **EP 2 874 250 B1**
(45) Veröffentlichungstag und Bekanntmachung des Hinweises auf die Patenterteilung: **24.02.2016**
(21) Anmeldenummer: 13193250.1
(22) Anmeldetag: 18.11.2013
(51) Int. Cl.: H02B 1/21

(54) **Elektrisches Installationsgerät**
Electric installation device
Appareil d'installation électrique

(43) Veröffentlichungstag der Anmeldung: 20.05.2015
(73) Patentinhaber: Jean Müller GmbH Elektrotechnische Fabrik, 65343 Eltville (DE)
(72) Erfinder: Kahlau, Richard, 55296 Harxheim (DE); Bleuel, Harald, 65375 Oestrich-Winkel (DE)
(74) Vertreter: Quermann, Helmut

(56) Entgegenhaltungen:
- AT-A4- 506 801

## Beschreibung

Die Erfindung betrifft ein elektrisches Installationsgerät, mit einem Gehäuse und mindestens einem Haken auf einer Rückseite des Installationsgeräts, wobei das Installationsgerät mittels Hakens an einer Sammelschiene befestigbar ist, wobei der Haken, zum Wechsel einer Abgangsseite des Installationsgerätes, von einer ersten Stellung in eine entgegengesetzt zu dieser angeordnete zweite Stellung verbringbar ist, sowie der Haken in einer Aufnahme gehalten und mit einer Stromschiene des Installationsgeräts verbindbar ist.

Ein derartiges elektrisches Installationsgerät ist insbesondere mit mehreren Haken versehen, zum Befestigen des jeweiligen Hakens an einer Sammelschiene eines Sammelschienensystems.

Bei dem elektrischen Installationsgerät handelt es sich beispielsweise um einen ein- oder mehrpoligen NH-Sicherungslasttrennschalter oder eine NH-Sicherungslastschaltleiste mit NH-Sicherungskontakten, um einen Klemmenblock, um ein Sicherungselement, aber auch nur um ein Unterteil oder einen Adapter für ein beliebiges elektrisches Installationsgerät.

Die Abgangsrichtung mehrerer nebeneinander in Reihe auf bzw. an den Sammelschienen montierter Geräte ist nach Möglichkeit stets gleich, zum Beispiel immer nach unten oder immer nach oben gewählt. Hierbei besteht gegebenenfalls die Notwendigkeit, die Abgangsrichtung für ein einzelnes Installationsgerät zu wechseln.

Unter diesem Aspekt ist ein Installationsgerät der eingangs genannten Art aus der DE 10 2005 042 746 A1 bekannt. Bei diesem bilden die Aufnahme für den Haken und das Gehäuse des Installationsgeräts ein Bauteil. Der Haken ist in der gehäusefesten Aufnahme gehalten, aus der er herausnehmbar ist, wobei er in die Aufnahme, in umgedrehter und somit in 180° gedrehter Stellung wieder eingeführt werden kann. Der Haken weist eine U-förmige Bodenplatte und zwei mit dieser verbundene L-förmige Haken auf. In die Bodenplatte ist eine Klemmschraube eingeschraubt. Diese stützt sich auf einer internen Stromschiene des Installationsgeräts ab. Beim Eindrehen der Klemmschraube drückt sich die Bodenplatte von der Stromschiene weg und zieht somit die L-förmigen Hakenarme in Richtung der internen Stromschiene. Da die äußere Sammelschiene räumlich zwischen den L-förmigen Hakenenden und der inneren Stromschiene angeordnet wird, wird bei genügender Drehung der Klemmschrauben die elektrische Verbindung zwischen der internen Stromschiene und der äußeren Sammelschiene durch Klemmung hergestellt. Die Lagerung des Hakens erfordert eine besondere Gestaltung des Gehäuses. Dieses weist Führungs-Halte-Schienen auf, von denen der Haken festgeklemmt und gehalten wird. Der Haken kann in den zwei um 180° zueinander verdrehten Orientierungen in die Aufnahme zwischen die Führungs-Halte-Schienen eingeführt werden. Diese komplexe Gestaltung des Gehäuses unter dem Aspekt der Lagerung des Hakens bedingt ein ergonomisch recht aufwendiges Handling beim Verbinden von Haken und Gehäuse.

Die AT506801 A4 offenbart ein derartiges Installationsgenät.

In der EP 1 271 727 A1 ist ein elektrisches Installationsgerät beschrieben, bei dem der jeweilige Haken, der an einer diesem zugeordneten Sammelschiene befestigbar ist, bezüglich der Abgangsseite des Installationsgeräts in zwei unterschiedlichen Positionen angeordnet werden kann. Hierbei ist der Haken im Installationsgerät selbst drehbar geführt. Der jeweilige Haken ist in einer Aufnahme gehalten, die um eine Achse um 180° schwenkbar in einem Gehäuse des Installationsgeräts gelagert ist. Hierbei ist die Aufnahme teilweise zylindrisch ausgebildet.

In der DE 10 2011 053 082 A1 ist eine Sammelschienenkontaktierung mit Schienendickenausgleich beschrieben.

Aufgabe der vorliegenden Erfindung ist es, ein elektrisches Installationsgerät der eingangs genannten Art so weiterzubilden, dass, bei einfacher baulicher Gestaltung des Gehäuses, ein einfaches Umrüsten des Installationsgeräts bezüglich der Anordnung der Haken möglich ist.

Gelöst wird die Aufgabe dadurch, dass das Gehäuse einen Kanal für die Aufnahme aufweist, wobei die Aufnahme, beim Einstecken in das Gehäuse in die erste Stellung und beim Entnehmen aus dem Gehäuse aus der ersten Stellung sowie beim Einstecken in das Gehäuse in die zweite Stellung und beim Entnehmen aus dem Gehäuse aus der zweiten Stellung, mittels des Kanals in dessen Längsrichtung geführt ist und die Aufnahme in der ersten und der zweiten Stellung mittels des Kanals seitlich positioniert ist, sowie die Aufnahme Rastmittel zum Rastieren mit dem Gehäuse in der ersten und der zweiten Stellung in Längsrichtung des Kanals aufweist, sowie die Aufnahme in dem mit dem Kanal zusammenwirkenden Bereich ein elastisches Element aufweist, das in der ersten Stellung und in der zweiten Stellung den Haken gegen die Stromschiene bewegt.

Die erfindungsgemäße Gestaltung des Installationsgeräts ermöglicht bei baulich einfacher Gestaltung des Installationsgerätes einen unkomplizierten und schnellen Wechsel der Stromabgangsseite des Installationsgeräts und überdies in der jeweiligen Stellung des mindestens einen Hakens eine einfache, sichere elektrische Kontaktierung des Hakens. Die Stromschiene bildet den Stromzugang des Installationsgerätes.

Insbesondere beim Einstecken der Aufnahme in das Gehäuse kann die Aufnahme infolge deren Ausbildung im Bereich des elastischen Elements geringfügig nachgeben, sodass ein einfaches Einstecken, insbesondere einfaches Einschwenken der Aufnahme in das Gehäuse möglich ist. Ist die Aufnahme in die erste Stellung bzw. zweite Stellung überführt, bewirkt das elastische Element, dass der von dieser aufgenommene Haken gegen die Stromschiene bewegt wird. Es ist dann nur noch erforderlich, das Installationsgerät auf die Sammelschiene aufzusetzen, wobei die Sammelschiene auf der einen Seite die Stromschiene kontaktiert und auf der dieser Seite abgewandten Seite den Haken kontaktiert. Hierdurch ist eine sichere Kontaktierung zwischen Haken, Sammelschiene und Stromschiene im Bereich des jeweiligen Hakens gewährleistet.

Die Ausbildung der Aufnahme mit dem elastischen Element ermöglicht ferner ein einfaches Entnehmen der Aufnahme aus dem Gehäuse. Da das elastische Element nachgiebig ist, kann die Aufnahme in einer Schiebe- oder Schwenkbewegung unkompliziert aus dem Gehäuse entnommen werden. Entsprechendes gilt für das Einsetzen der Aufnahme in das Gehäuse.

Bei den Bewegungen der Aufnahme zum Einstecken in das Gehäuse bzw. zum Entnehmen aus dem Gehäuse ist die definierte Führung der Aufnahme im Gehäuse durch den Kanal gewährleistet.

Die Rastmittel zum Rastieren von Aufnahme und Gehäuse in den beiden Stellungen - erster Stellung und zweiter Stellung - können unterschiedlich gestaltet sein. Es wird als besonders vorteilhaft angesehen, wenn die Aufnahme mit mindestens einem Vorsprung versehen ist, der in der ersten Stellung bzw. zweiten Stellung mit dem Gehäuse rastiert. Insbesondere weist die Aufnahme im Bereich zweier seitlicher Wandungen des Kanals Rücksprünge auf, in die zwei Rastvorsprünge der Aufnahme in der ersten Stellung bzw. zweiten Stellung der Aufnahme einrasten. Diese Rastierung kann auf einfache Art und Weise aufgehoben werden, indem die Aufnahme entgegen der Rückstellkraft des elastischen Elements bewegt wird und damit die Ausnehmung nicht im formschlüssigen Eingriff mit dem Gehäuse steht.

Insbesondere bei einem elektrischen Installationsgerät, das mit mehreren, insbesondere drei Sammelschienen zusammenwirkt, ist es von Vorteil, wenn einer der Haken mechanisch fest mit einer der Sammelschienen, insbesondere der mittleren Sammelschiene verspannbar ist. Unter diesem Aspekt ist es von Vorteil, wenn ein Haken zwei Schenkel und einen diesen verbindenden Steg aufweist, wobei einer der Schenkel ein Durchgangsloch mit Gewinde und eine in das Gewinde eingeschraubte Zustellschraube zum Klemmen der Sammelschiene und der Stromschiene zwischen der Zustellschraube und dem anderen Schenkel des Hakens aufweist. Bei dieser Ausbildung kann gleichfalls die Aufnahme für den Haken derart gestaltet sein, dass sie in dem mit dem Kanal zusammenwirkenden Bereich ein elastisches Element aufweist. Dieses bewegt in der ersten Stellung und in der zweiten Stellung die Aufnahme gegen die Stromschiene. Der der Stromschiene zugewandte Schenkel des Hakens ist in diesem Fall nicht gegen die Stromschiene bewegt, weil die mit diesem Schenkel zusammenwirkende Gewindeschraube die Aufgabe hat, den Kontakt des Hakens zur Stromschiene herzustellen.

Gemäß einer bevorzugten Weiterbildung der Erfindung ist vorgesehen, dass die Stromschiene in einem mit dem Haken bzw. der dem Haken zugeordneten Zustellschraube zusammenwirkenden Bereich quer zur Längserstreckung des Kanals angeordnet ist. Dies ermöglicht ein besonders einfaches Einsetzen bzw. Entnehmen der Aufnahme in das bzw. aus dem Gehäuse.

Besonders zweckmäßig ist es, wenn die Stromschiene zumindest im Bereich des Hakens als Platte ausgebildet ist, wobei die Platte parallel zu einem Bodenbereich des Kanals angeordnet ist, sowie der Kanal den Bodenbereich und senkrecht zu diesen angeordnete Seitenwandungen aufweist. Die Stromschiene bildet somit quasi eine teilweise Abdeckung des Kanals, der einen im Wesentlichen rechteckigen Querschnitt aufweist. Diese Gestaltung ermöglicht eine definierte Positionierung der Aufnahme in der ersten Stellung oder zweiten Stellung, ferner ein einfaches Führen der Aufnahme beim Einstecken in das Gehäuse bzw. beim Entnehmen aus dem Gehäuse.

Der jeweilige Haken weist vorzugsweise einen U-förmigen Querschnitt auf. Darunter wird sowohl ein streng U-förmiger Querschnitt verstanden, mit parallel zueinander angeordneten Schenkeln und einem diese verbindenden, senkrecht zu den Schenkeln angeordneten Steg. Verstanden wird hierunter beispielsweise aber auch eine Ausbildung des Hakens, bei der der eine oder andere Schenkel, insbesondere derjenige Schenkel, der der Stromschiene nicht zugewandt ist, einen in Längsrichtung des Schenkels wellenförmigen Verlauf hat, sodass dieser Schenkel nicht über seine ganze Länge an der Sammelschiene anliegt, sondern im Wesentlichen in Art einer Linienberührung, womit dieser Schenkel quasi Federeigenschaft besitzt.

Baulich besonders einfach lässt sich die Anordnung von Aufnahme und dieser zugeordnetem Haken herstellen und montieren, wenn der Haken in der Aufnahme gelagert und in einer in die Aufnahme eingesetzten Stellung rastierend mit der Aufnahme verbunden ist. Dies ermöglicht es insbesondere, den Haken und die Aufnahme vorzumontieren, indem der Haken in die Aufnahme eingesteckt wird und mit dieser rastiert. Anschließend wird die Einheit aus Haken und Aufnahme in die erste Stellung bzw. zweite Stellung in das Gehäuse eingesetzt.

Vorzugsweise weist der Haken zwei Schenkel und einen diese verbindenden Steg auf, wobei der Haken im Bereich des Stegs rastierend mit der Aufnahme verbunden ist. Vorzugsweise weist die Aufnahme beidseitig Ansätze auf, die in der ersten und der zweiten Stellung auf dem Gehäuse aufliegen. Hierdurch ergibt sich eine symmetrische Abstützung der Aufnahme am Gehäuse.

Die Aufnahme weist vorzugsweise einen U-förmigen Querschnitt auf. Damit ist der Querschnitt der Aufnahme bezüglich des Querschnitts des Hakens abgestimmt. Insbesondere weist die Aufnahme zwei Schenkel und einen diese verbindenden Steg auf, wobei die beiden Schenkel der Haken im Bereich der beiden Schenkel der Aufnahme und der Steg des Hakens im Bereich des Steges der Aufnahme angeordnet ist. Der Haken, die diesem zugeordnete Sammelschiene und der diesem zugeordnete Stromleiter bestehen aus stromleitenden Material. Das Gehäuse und damit auch die Aufnahme besteht vorzugsweise aus Kunststoff. Aufgrund der isolierenden Eigenschaften des Kunststoffs ist die Ausbildung von Haken und Aufnahme, wobei die Aufnahme entsprechend dem Haken gestaltet ist und diesen umgibt, hervorragend geeignet, die stromleitende Eigenschaft aufweisenden Haken isolierend abzudecken.

Das elastische Element ist insbesondere als biegsamer Vorsprung ausgebildet, der als mindestens eine Platte ausgebildet ist. Es ist durchaus möglich, mehrere Platten, insbesondere zwei Platten vorzusehen. Diese sind insbesondere in derselben Ebene angeordnet, bezogen auf deren jeweiligen gespannten bzw. entspannten Zustand. Über die mindestens eine Platte kann auf einfache Art und Weise die Kraft vom Gehäuse auf die Aufnahme und umgekehrt übertragen werden.

Besonders zweckmäßig ist es, wenn der biegsame Vorsprung mit dem Steg der Aufnahme im Bereich des Übergangs von diesem Steg zu dem Schenkel der Aufnahme, der der Stromschiene benachbart ist, verbunden ist. Diese Gestaltung ist besondere einfach und insbesondere mittels eines Kunststoff-Spritzgussteils darstellbar.

Insbesondere ist vorgesehen, dass die Aufnahme aus Kunststoff besteht, vorzugsweise als Kunststoff-Spritzgussteil ausgebildet ist.

Ist es nicht erforderlich, den jeweiligen Haken mechanisch mit erhöhter Klemmkraft mit einer diesem Haken zugeordneten Sammelschiene zu verbinden, wird es als vorteilhaft angesehen, wenn dieser Haken zwei Schenkel und einen diesen verbindenden Steg aufweist, wobei die Schenkel einen solchen lichten Abstand voneinander aufweisen, dass eine Sammelschiene definierter Stärke unter Vorspannung des Hakens zwischen den beiden Schenkeln befestigbar ist.-Im Fall der mechanischen Fixierung der Sammelschiene mittels des Hakens bei erhöhter Spannkraft ist vorgesehen, dass ein weiterer Haken zwei Schenkel und einen diese verbindenden Steg aufweist, wobei einer der Schenkel ein Durchgangsloch mit Gewinde und eine in das Gewinde eingeschraubte Zustellschraube zum Klemmen einer Sammelschiene zwischen der Zustellschraube und dem anderen Schenkel des Hakens aufweist.

Gemäß einer Weiterbildung der Erfindung ist vorgesehen, dass das Installationsgerät für zwei unterschiedliche Dicken bzw. Stärken von Sammelschienen einsetzbar ist. Dies erhöht den Einsatzbereich und damit die Flexibilität des Installationsgeräts signifikant. Unter diesem Aspekt ist vorgesehen, dass die Aufnahme im Bereich eines freien Endes desjenigen Schenkels der Aufnahme, der dem Kanal abgewandt ist, ein Ausgleichselement schwenkbar aufnimmt. Das Ausgleichselement ist in einer ersten Schwenkstellung aus dem lichten Aufnahmebereich des Hakens geschwenkt, sodass eine Sammelschiene mit relativ großer Dicke, beispielsweise einer Dicke von 10 mm, zwischen den Schenkeln des Hakens platziert werden kann, somit zwischen den beiden Schenkeln des Hakens geklemmt ist. In einer zweiten Schwenkstellung ist das Ausgleichselement in den lichten Aufnahmebereich des Hakens geschwenkt und in dieser Schwenkstellung rastierend festgelegt, zur Aufnahme einer in der Dicke reduzierten Sammelschiene, beispielsweise einer Sammelschiene der Dicke 5 mm, zwischen dem Ausgleichselement und demjenigen Schenkel des Hakens, der der Stromschiene zugewandt ist.

Weitere Merkmale der Erfindung sind in den Unteransprüchen, der Beschreibung der Zeichnung und der Zeichnung selbst dargestellt, wobei bemerkt wird, dass alle Einzelmerkmale und alle Kombinationen von Einzelmerkmalen erfindungswesentlich sind.

In der Zeichnung ist die Erfindung anhand eines bevorzugten Ausführungsbeispiels dargestellt, ohne hierauf beschränkt zu sein. Es stellt dar:
- Fig. 1: ein elektrisches Installationsgerät, das als Niederspannungs-Hochleistungs-Sicherungsschaltgerät (NH-Sicherungsschaltgerät) ausgebildet ist, wobei das Installationsgerät auf einem Sammelschienensystem montiert ist, in einer räumlichen Darstellung veranschaulicht, schräg von oben auf einen Gerätedeckel des Installationsgeräts gesehen, für den Stromabgang nach unten,
- Fig. 2: die in Fig. 1 gezeigte Anordnung, in einer räumlichen Darstellung gezeigt, schräg von unten, somit auf das Sammelschienensystem gesehen, veranschaulicht für drei die jeweilige Sammelschiene hintergreifende Haken, die in einer ersten Stellung in einem Gehäuse des Installationsgeräts angeordnet sind,
- Fig. 3: eine Seitenansicht der in den Fig. 1 und 2 gezeigten Anordnung, in Längsrichtung der Sammelschienen des Sammelschienensystems gesehen,
- Fig. 4: die Anordnung gemäß Fig. 3, senkrecht zur Ebene des Sammelschienensystems, im Bereich der drei die Sammelschienen hintergreifenden Haken geschnitten, (Stromabgang nach unten),
- Fig. 5: das Installationsgerät, in einer Ansicht gemäß Fig. 3, bei demontierter Anordnung von Haken und den jeweiligen Haken aufnehmender Aufnahme,
- Fig. 6: in einer räumlichen Ansicht die Anordnung des mit der mittleren Sammelschiene verbindbaren Hakens und der diesen aufnehmenden Aufnahme,
- Fig. 7: eine Explosionsdarstellung der die Anordnung gemäß Fig. 6 bildenden Bauteile,
- Fig. 8: in einer räumlichen Ansicht die Anordnung des mit einer der äußeren Sammelschienen verbindbaren Hakens und der diesen aufnehmenden Aufnahme,
- Fig. 9: eine Explosionsdarstellung der die Anordnung gemäß Fig. 8 bildenden Bauteile,
- Fig. 10: ein Schnitt durch die Anordnung gemäß Fig. 4, allerdings bei bezüglich der einen äußeren Sammelschiene demontierter Anordnung von Haken und diesen aufnehmender Aufnahme,
- Fig. 11: die in den Fig. 8 und 9 veranschaulichte Anordnung von Haken und Aufnahme in einer eingeschwenkten Stellung eines Ausgleichselements der Aufnahme zwecks Lagerung des elektrischen Installationsgeräts in den Schienen des Sammelschienensystems, die eine geringere Dicke aufweisen,

- Fig. 12: das Installationsgerät gemäß der Ausbildung in Fig. 4, allerdings bei in einer zweiten Stellung in dem Gehäuse des Installationsgeräts angeordneten Haken, für den Stromabgang nach oben.

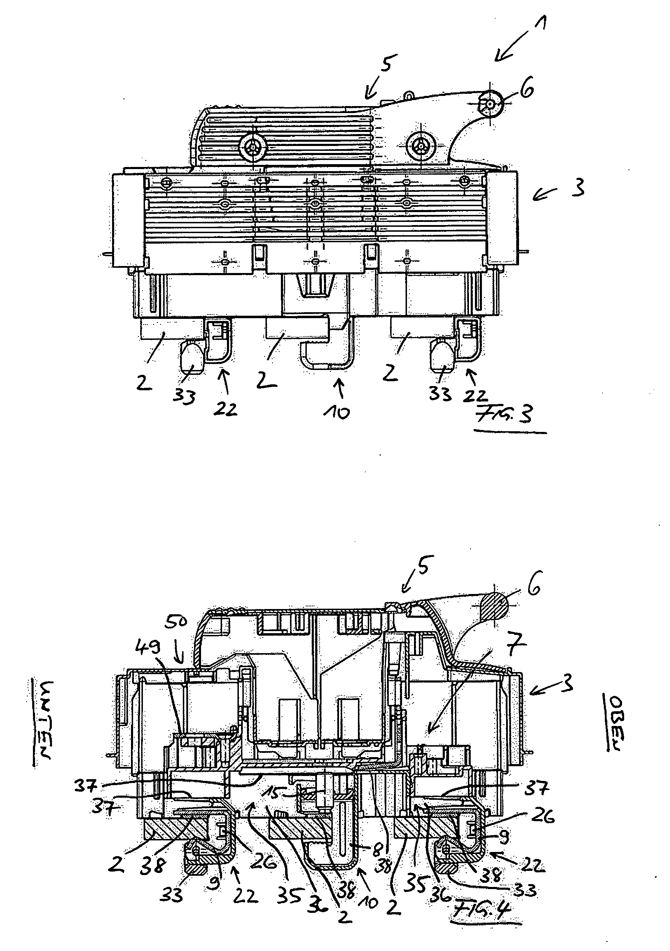

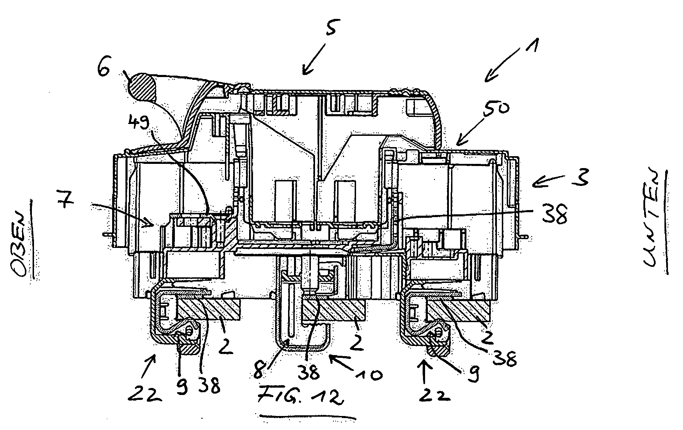

Die Figuren zeigen ein elektrisches Installationsgerät 1, das als NH-Sicherungsschaltgerät 1 ausgebildet ist. Dieses dient dem Absichern dreier Phasen R, S, T und ist mit einem drei Sammelschienen 2 aufweisenden Sammelschienensystem verbunden. Die Sammelschienen 2 sind parallel zueinander und horizontal angeordnet und nur über eine Teillänge veranschaulicht. Die Sammelschienen 2 weisen jeweils einen identischen, rechteckigen Querschnitt auf. Das Sicherungsschaltgerät 1 weist ein Geräteunterteil 3 aus Kunststoff mit sechs in diesen gelagerten Kontakten mit auf. Jede Phase weist zwei Kontakte zum Einstecken eines NH-Sicherungseinsatzes auf, ferner eine mit dem jeweiligen Kontakt verbundene Stromschiene, wobei die eine, den Stromzugang des Installationsgeräts 1 bildende Stromschiene 38 mit einer Sammelschiene 2 und die andere, den Stromabgang des Installationsgeräts 1 bildende Stromschiene 49 mit einem Stromkabel verbindbar ist. Diese Stromkabel werden, je nach gewünschter Stromabgangsseite, auf der Unterseite (siehe z. B. Fig. 4) oder auf der Oberseite (siehe Fig. 12) des Geräteunterteils 2 herausgeführt. Veranschaulicht sind drei herausbrechbare Deckelemente 4, durch die bei herausgebrochenem Deckelement 4 jeweils ein Stromkabel aus dem Geräteunterteil 3 herausgeführt werden kann.

Das Geräteunterteil 3 weist ein Gehäuse 7 auf, das als Kunststoffspritzgussteil ausgebildet ist.

Befestigt wird das Sicherungsschaltgerät 1 an den drei Sammelschienen 2 mittels dreier Haken aus Metall, wobei ein mit der mittleren Sammelschiene 2 verbindbarer Haken mit der Bezugsziffer 8 und die mit den äußeren Sammelschienen 2 verbindbaren beiden Haken mit der Bezugsziffer 9 bezeichnet sind. Jeder Haken 8 bzw. 9 ist, seitlich auf die Sammelschiene 2 aufgesteckt, in Wirkverbindung mit dieser bringbar. Die Haken 8, 9 werden von oben auf die Sammelschiene 2 aufgesteckt.

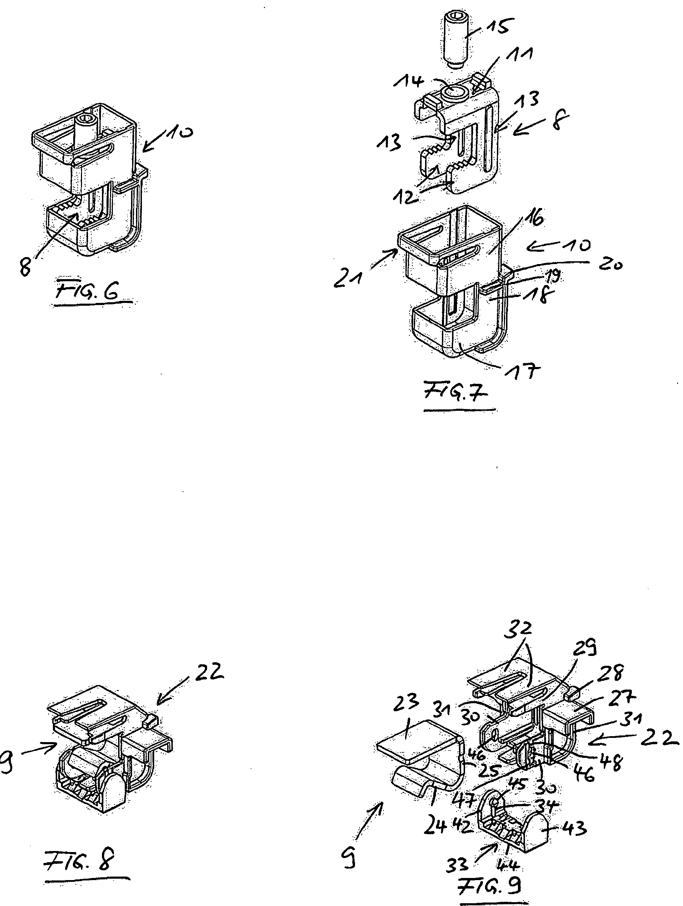

Die Gestaltung des jeweiligen mittleren Hakens 8 und dessen Zusammenwirken mit einer Aufnahme 10 ist in den Fig. 6 und 7 veranschaulicht. Der Haken 8 weist zwei Schenkel 11, 12 und einen diese verbindenden Steg 13 auf. Der Schenkel 11 weist ein Durchgangsloch mit Gewinde, insgesamt mit der Bezugsziffer 14 bezeichnet, und eine in das Gewinde eingeschraubte Zustellschraube 15 auf. Diese Zustellschraube 15 dient dem Klemmen der mittleren Sammelschiene 2 zwischen der Zustellschraube 15 und dem Schenkel 12 des Hakens 8. Die Innenkontur der Aufnahme 10 ist der Außenkontur des Hakens 8 angepasst, derart, dass bei in die Aufnahme 10 eingestecktem Haken 8, wie es in Fig. 6 veranschaulicht ist, der Haken 8 klemmend in der Aufnahme 10 gehalten ist. Auch die Aufnahme 10 weist einen U-förmigen Querschnitt auf. Die Aufnahme besitzt zwei Schenkel 16 und 17 sowie einen diese verbindenden Steg 18. Die Aufnahme 10 weist im Bereich des Stegs 18 beidseitig Ansätze 19 auf, die bei in das Gehäuse 7 eingesetzter Aufnahme 10 auf dem Gehäuse 7 aufliegen. Der Haken 8 und die Aufnahme 10 sind symmetrisch ausgebildet. Es ist nur einer der Ansätze 19 sichtbar. Im Bereich des jeweiligen Ansatzes 19 weist die Aufnahme 10 einen Rastvorsprung 20 auf, zum Rastieren mit dem Gehäuse 7 in der eingesetzten Stellung der Aufnahme 10.

Die Aufnahme 10 weist ferner auf ihrer dem Schenkel 17 abgewandten Seite ein elastisches Element 21 auf, das als U-förmiger Federbügel aus Kunststoff ausgebildet ist. Bei der Ausübung einer Kraft auf das elastische Element 21 biegt sich dieses elastisch in Richtung der Schenkel 16 und 17. Die Aufnahme 10, somit umfassend die Ansätze 19, die Rastvorsprünge 20 und das elastische Element 21 sind als Kunststoffspritzgussteil ausgebildet.

Der Haken 9, der eine der jeweiligen äußeren Sammelschienen 2 zugeordnet ist, und die diesen Haken 9 aufnehmende Aufnahme 22 sind weitgehend entsprechend dem Haken 8 und der Aufnahme 10 ausgebildet, mit dem grundlegenden Unterschied, dass dem Haken 9 keine Zustellschraube 15 zugeordnet ist. Insofern wird, zur Vermeidung von Wiederholungen, sinngemäß auf die Beschreibung von Haken 8 und Aufnahme 10 verwiesen, allerdings unter Berücksichtigung der neuen Bezugsziffern der Teilbereiche von Haken 9 und Aufnahme 22, die sich wie folgt, unter Verweis auf die Darstellung der Fig. 8 und 9 ergibt.

Der Haken 9 weist Schenkel 23 und 24 sowie einen diese verbindenden Steg 25 auf. Hierbei ist der Haken 9 aus einer Platte gebildet, mit einem ebenen Schenkel 23, einem ebenen Steg 25 und einem gewellt ausgebildetem Schenkel 24. Der Haken 9 weist somit U-förmigen Querschnitt auf. Der Haken 9 ist in der Aufnahme 22 gelagert und in einer in die Aufnahme eingesetzten Stellung, wie es für die Fig. 8 veranschaulicht ist, rastierend mit der Aufnahme 22 verbunden. Fig. 4 veranschaulicht in diesem Zusammenhang, dass ein Rastvorsprung 26 der Aufnahme den Haken 9 im Bereich des Steges 25 hintergreift. Während bei der anderen Ausführungsform der Haken 8 mit dem Schenkel 12 vorlaufend in die Aufnahme 10 eingesteckt wird, wird bei der vorliegend beschriebenen Ausführungsform der Haken 9 mit dem Steg 25 vorlaufend in die Aufnahme 22 eingesteckt. Die Aufnahme 22 weist beidseitig Ansätze 27 auf, die bei in das Gehäuse 7 eingesetzter Stellung der Aufnahme 22 auf dem Gehäuse 7 aufliegen. Ferner weist die Aufnahme 22 zwei Rastvorsprünge 28 auf, die bei in das Gehäuse 7 eingesetzter Aufnahme 22 mit dem Gehäuse 7 rastieren. Es ist wieder jeweils nur ein Ansatz 27 und nur ein Rastvorsprung 28 sichtbar. Die Aufnahme 22 weist Schenkel 29 und 30 sowie einen diese verbindenden Steg 31 auf. Demzufolge ist der Querschnitt der Aufnahme 22 U-förmig. Die beiden Schenkel 23 und 24 des Hakens 9 sind im Bereich der beiden Schenkel 29, 30 der Aufnahme 22 und der Steg 25 des Hakens 9 im Bereich des Steges 31 der Aufnahme 22 angeordnet.

Im Bereich des Schenkels 29, auf der dem Schenkel 30 abgewandten Seite, weist die Aufnahme 23 ein elastisches Element 32 auf, das als U-förmiger Federbügel ausgebildet ist. Bei Ausübung eines Drucks auf das elastische Element 32 bewegt sich dieses in Richtung der Schenkel 29 und 30 der Aufnahme 22. Das elastische Element 32 ist im Bereich des dem Steg 31 zugewandten Endes mit dem Schenkel 29 bzw. dem Steg 31 verbunden.

Auch diese Aufnahme 22 ist somit, einschließlich der Ansätze 27, der Rastvorsprünge 28 und des elastischen Elements 32, als Kunststoffspritzgussteil ausgebildet.

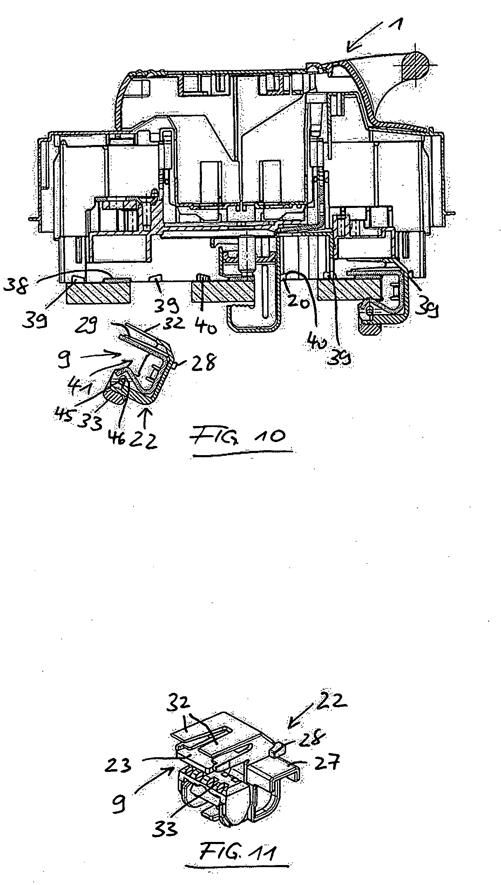

Die Schenkel 11 und 12 des Hakens 8 und die Schenkel 23 und 24 des Hakens 9 sind in einem solchen lichten Abstand positioniert, dass eine Sammelschiene 2 definierter Dicke, beispielsweise eine Sammelschiene mit einer Dicke von 10 mm, sowie eine Stromschiene 38 bei dem Haken 9 unter Vorspannung dieses Hakens 9 zwischen dessen beiden Schenkeln 23, 24 befestigbar ist, bzw. bei dem Haken 8 zwischen dem Schenkel 12 und der Zustellschraube 15 eingeklemmt werden kann. Da bei dem Haken 8 die Zustellschraube 15 vorgesehen ist, ist dieser Haken 8 für unterschiedliche Sammelschienendicken einsetzbar. Um auch den jeweiligen Haken 9 für unterschiedliche Sammelschienendicken, konkret eine andere Sammelschienendicke, beispielsweise eine solche von 5 mm Dicke, einsetzbar zu gestalten, ist die diesem Haken 9 zugeordnete Aufnahme 22 derart gestaltet, dass sie im Bereich des freien Endes des Schenkels 30 ein Ausgleichselement 33 schwenkbar aufnimmt. Für die relativ große Dicke der Sammelschiene 2 ist das Ausgleichselement 33 aus der ersten, in Fig. 8 gezeigten Schwenkstellung aus dem lichten Aufnahmebereich 41 des Hakens 9 geschwenkt, zur Aufnahme der Sammelschiene 2 und der Stromschiene 38 zwischen den Schenkeln 23 und 24 des Hakens 9. In einer um 90° bezüglich dieser ersten Schwenkstellung geschwenkten zweiten Schwenkstellung ist das Ausgleichselement 23 in den lichten Aufnahmebereich 41 des Hakens 9 geschwenkt und in dieser Schwenkstellung rastierend festgelegt. In dieser Schwenkstellung werden die in der Dicke reduzierte Sammelschiene, beispielsweise eine Sammelschiene der Dicke 5 mm, und die Stromschiene 38 zwischen dem Ausgleichselement 33 und dem Schenkel 23 des Hakens aufgenommen. Die Kontaktierung mittels des Haken 9 erfolgt in diesem Fall somit nur durch den Schenkel 23 des Hakens 9. Die eingeschwenkte zweite Schwenkstellung des Ausgleichselements 23 ist in Fig. 11 veranschaulicht.

Im Einzelnen weist das aus Kunststoff bestehende, insbesondere als Kunststoff-Spritzgussteil ausgebildete Ausgleichselement 33 U-förmigen Querschnitt auf, mit zwei parallel angeordneten Schenkeln 42, 43 und einem diese verbindenden Steg 44. Die beiden Schenkel 42, 43 weisen auf deren zugewandten Seiten im Bereich der freien Enden der Schenkel 42, 43 Lagerzapfen 45 auf, über die das Ausgleichselement 33 in Aufnahmelöchern 46 des Schenkels 30 der Aufnahme 22 gelagert sind. Auf den einander zugewandten Seiten der Schenkel 42, 43 sind diese mit Rastvorsprüngen 34 versehen, von denen in Fig. 9 nur der Rastvorsprung 34 des Schenkels 42 sichtbar ist. Auf den einander abgewandten Seiten des Schenkels 30 der Aufnahme 22 weist der Schenkel 30, ausgehend von den Aufnahmelöchern 46 diametral gerichtete Rastvertiefungen 47, 48 auf, wobei nur die Rastvertiefungen 47, 48 auf der einen Seite des Schenkels 30 in Fig. 9 sichtbar sind. Ist das Ausgleichselement 31 aus dem lichten Aufnahmebereich 41 ausgeschwenkt, greifen die Rastvorsprünge 34 in die Rastvertiefungen 47 ein. Ist das Ausgleichselement 33 in den lichten Aufnahmebereich 41 eingeschwenkt, rastieren die Rastvorsprünge 34 mit den Rastvertiefungen 48.

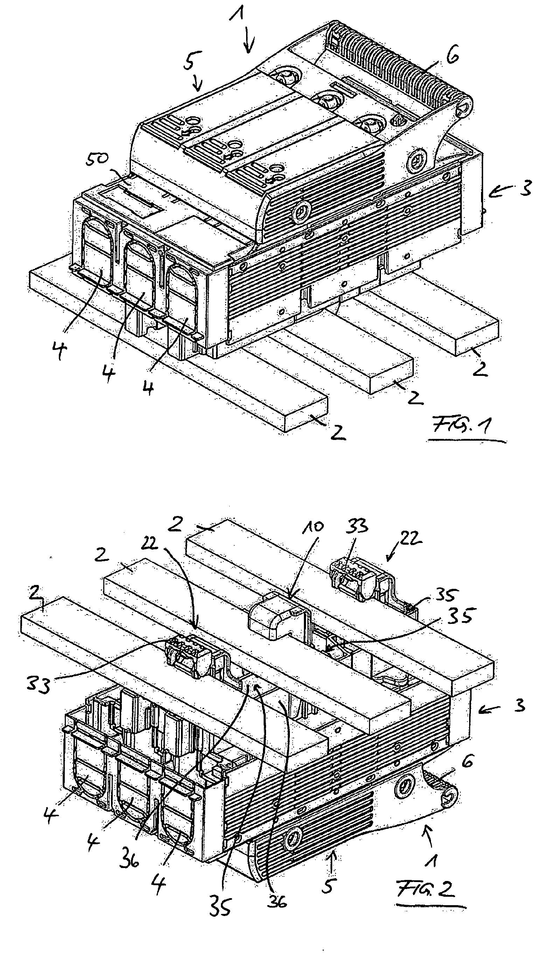

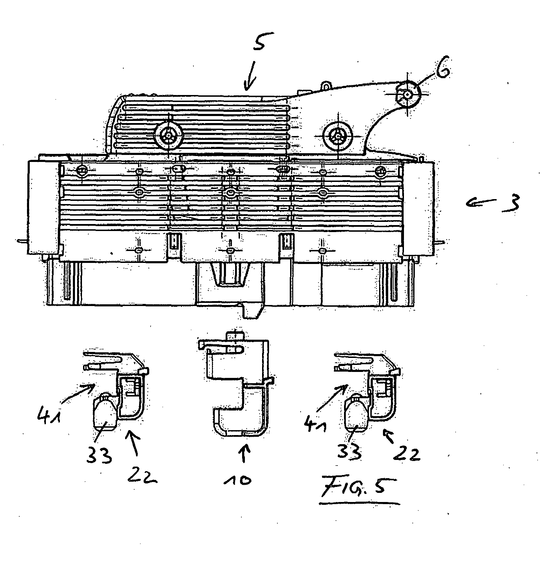

Insbesondere die Fig. 1 bis 5 veranschaulichen bei dem elektrischen Installationsgerät 1 die auf der Rückseite, somit auf der den Sammelschienen 2 zugewandten Seite des Installationsgeräts 1 angeordneten Haken 8, 9. Das Installationsgerät 1 ist mittels der Haken 8, 9 an den Sammelschienen 2 befestigbar. Die beschriebene Ausbildung der Haken 8 und 9 und deren Lagerung in den Aufnahmen 10, 22 mit Ausbildung des elastischen Elements 21 der Aufnahme 10 und des elastischen Elements 32 der Aufnahme 22 ermöglicht, zum Wechsel einer Abgangsseite des Installationsgeräts 1, die Haken 8, 9 von einer ersten Stellung in eine entgegengesetzt zu dieser angeordnete zweite Stellung zu verbringen. Hierzu weist das Gehäuse 7 einen Kanal 35, insbesondere einen im Bereich der halben Breite des Installationsgeräts 1 angeordneten Kanal 35 auf, der der Aufnahme der drei Aufnahmen, nämlich Aufnahme 10 für den Haken 8, Aufnahme 22 für den Haken 9 und Aufnahme 10 für den Haken 8 dient. Die jeweilige Aufnahme 10 bzw. 22 ist, beim Einstecken in das Gehäuse 7 in die erste Stellung und beim Entnehmen aus dem Gehäuse 7 aus der ersten Stellung sowie beim Einstecken in das Gehäuse 7 in die zweite Stellung und beim Entnehmen aus dem Gehäuse 7 aus der zweiten Stellung, mittels des Kanals 25 in dessen Längsrichtung geführt. Die jeweilige Aufnahme 10 bzw. 22 ist in den beiden Stellungen mittels des Kanals 25 in dessen Längsrichtung geführt. Hierzu weist der Kanal 35 parallele Seitenwände 36, von denen nur eine veranschaulicht ist und einen diese Seitenwände verbindenden, senkrecht zu diesen stehenden Boden 37 auf, wobei der Boden über die Länge des Kanals 25 auf einem unterschiedlichen Niveau angeordnet ist, insbesondere auf demselben Niveau im Bereich der beiden äußeren Aufnahmen 22 und auf einem Niveau, das einen größeren Abstand zur Sammelschiene 2 bildet, im Bereich der Aufnahme 22.

Fig. 4 veranschaulicht die Anordnung und Position der jeweiligen Stromschiene 38 der Phase R bzw. S bzw. T, die mit dem jeweiligen Kontakt verbunden ist. Diese jeweilige Stromschiene 38 ist im Bereich der zugeordneten Sammelschiene 2 plattenförmig ausgebildet und dient der unmittelbaren Kontaktierung der dieser zugeordneten Sammelschiene 2. Fig. 4 veranschaulicht das mit den drei Sammelschienen 2 verbundene elektrische Installationsgerät 1. Die von den Aufnahmen 10 bzw. 22 aufgenommenen Haken 8, 9 sind von derselben Seite auf die Sammelschienen 2 mit einer Dicke von 10 mm aufgesteckt und es ist der Haken 8 mittels der Zustellschraube 15 verspannt. Konkret wirkt die Zustellschraube 15 auf die der Sammelschiene 2 abgewandte Seite des Anschlusses 38 ein und klemmt die Anordnung von Stromschiene 38 und Sammelschiene 2 zwischen der Zustellschraube 15 und dem Schenkel 12 des Hakens 8. Betreffend den jeweiligen Haken 9 klemmt dieser aufgrund Federvorspannung des Schenkels 24 die diesem Haken 9 zugeordnete Sammelschiene 2 zwischen dem Schenkel 24 und der Stromschiene 38 bei Anlage des anderen Schenkels 23 auf der der Sammelschiene 2 abgewandten Seite der Stromschiene 38.

Das elastische Element 21 der Aufnahme 10 und das elastische Element 32 der Aufnahme 22 gewährleistet eine eindeutige Lageanordnung der jeweiligen Anordnung von Haken 8 und Aufnahme 10 bzw. Haken 9 und Aufnahme 22 bezüglich dem Boden 37 des Kanals 35 und der Stromschiene 38.

Fig. 10 verdeutlicht die Lagepositionierung der Anordnung von Haken 9 und Aufnahme 22, wobei diese Lagepositionierung auch für die Anordnung von Haken 8 und Aufnahme 10 gilt, die beim Einsetzen der Anordnung in den Kanal 35 zwecks Wechsel der Abgangsseite vorgesehen ist. In der gezeigten Winkelstellung wird die Anordnung von Haken 9 und Aufnahme 22 in den Bereich zwischen der Stromschiene 38 und dem Boden 37 eingesetzt, wobei das elastische Element 32 nachgeben kann. Beim Einsetzen des Schenkels 29 und des elastischen Elements 32 gelangt das elastische Element 32 gegen den Boden 37 und schwenkt die Anordnung von Haken 9 und Aufnahme 22 in die Stellung gemäß Fig. 4. Das Vorbeschriebene gilt entsprechend beim Einsetzen der Anordnung von Haken 8 und Aufnahme 10. Beim Entnehmen der Anordnung von Haken 8 und Aufnahme 10 bzw. Haken 9 und Aufnahme 22 wird das jeweilige elastische Element 21 bzw. 32 wieder gespannt, sodass ausreichend Raum zum Entnehmen zur Verfügung steht.

In der eingesetzten Stellung der Anordnungen von Haken 8 und Aufnahme 10 bzw. Haken 9 und Aufnahme 22 sind diese festgelegt, da die Rastvorsprünge 28 in Ausnehmungen 39 des Gehäuses 7 bzw. die Rastvorsprünge 20 in Ausnehmungen 40 des Gehäuses 7 eingreifen. Durch Schwenken der jeweiligen Anordnung in Richtung der in Fig. 10 gezeigten Winkelposition bei gleichzeitiger Spannung des elastischen Elements 21 bzw. 32 gelangen die Rastvorsprünge 20 bzw. 28 außer Eingriff mit den Ausnehmungen 40 bzw. 39, sodass die Abgangsseite des Installationsgeräts gewechselt werden kann.

Die mit dem jeweiligen Haken 8 bzw. 9 zusammenwirkende Stromschiene 38 ist zumindest im Bereich des Anschlusses an den Haken 8 bzw. 9 quer zur Längserstreckung des Kanals 35 angeordnet. Diese Stromschiene 38 ist zumindest im Bereich des Anschlusses als Platte ausgebildet, die parallel zum Boden 37 des Kanals 35 angeordnet ist.

Die Fig. 1 bis 11 zeigen den grundsätzlichen Aufbau des elektrischen Installationsgeräts 1, insbesondere im Zusammenwirken mit den drei Sammelschienen 2, wobei die Haken 8, 9 von oben auf die horizontal angeordneten Sammelschienen 2 aufgesteckt sind und die Griffstange 6 oben angeordnet ist, womit der Gerätedeckel 5 um eine nicht näher veranschaulichte untere Achse schwenkbar ist. Überdies ist das Geräteunterteil 3 so angeordnet, dass die Deckelemente 4 auf der Unterseite des Geräteunterteils 3 angeordnet sind, womit das Installationsgerät 1 im unteren Bereich die Anschlüsse für nicht veranschaulichte Stromkabel aufweist, im Bereich derer, nach dem Herausbrechen der Deckelemente 4 die Stromkabel aus dem Geräteunterteil 3 herausgeführt werden. Diese Stromkabel sind an die jeweilige stromabgangsseitige Stromschiene angeschlossen. Nur für die dem Haken 8 zugeordnete Phase sind im Bereich der dieser zugeordneten NH-Sicherung das dortige Ende der Stromschiene 38 sowie die stromabgangsseitige Stromschiene 49 veranschaulicht.

Fig. 12 zeigt die Modifizierung dahingehend, dass die Abgangsseite des Installationsgeräts 1 gewechselt worden ist, womit die Haken 8, 9 von der in den Fig. 1 bis 11 gezeigten ersten Stellung in eine entgegengesetzt zu dieser angeordnete zweite Stellung verbracht sind. In dieser zweiten Stellung der Haken 8, 9 wird das Installationsgerät 1 gleichfalls von oben auf die Sammelschiene 2 aufgesteckt und es ist die Griffstange 6 oben angeordnet. Die stromabgangsseitigen Stromschienen, wiederum nur veranschaulicht für die der Phase des Hakens 8 zugeordnete Stromschiene 49, sind im oberen Bereich des Installationsgeräts 1 angeordnet, womit die Stromkabel im oberen Bereich des Installationsgeräts 1 herausgeführt werden.

Beim Wechsel der Abgangsseite werden der Gerätedeckel 5 und Abdeckelemente 50, die im Geräteunterteil 3 gelagert sind, entsprechend umgesteckt.

### Bezugszeichenliste

- 1: Elektrisches Installationsgerät
- 2: Sammelschiene
- 3: Geräteunterteil
- 4: Deckelement
- 5: Gerätedeckel
- 6: Griffstange
- 7: Gehäuse
- 8: Haken
- 9: Haken
- 10: Aufnahme
- 11: Schenkel
- 12: Schenkel
- 13: Steg
- 14: Durchgangsloch mit Gewinde
- 15: Zustellschraube
- 16: Schenkel
- 17: Schenkel
- 18: Steg
- 19: Ansatz
- 20: Rastvorsprung
- 21: Elastisches Element
- 22: Aufnahme
- 23: Schenkel
- 24: Schenkel
- 25: Steg
- 26: Rastvorsprung
- 27: Ansatz
- 28: Rastvorsprung
- 29: Schenkel
- 30: Schenkel
- 31: Steg
- 32: Elastisches Element
- 33: Ausgleichselement
- 34: Rastvorsprung
- 35: Kanal
- 36: Seitenwand
- 37: Boden
- 38: Stromschiene
- 39: Ausnehmung
- 40: Ausnehmung
- 41: Aufnahmebereich
- 42: Schenkel
- 43: Schenkel
- 44: Steg
- 45: Lagerzapfen
- 46: Aufnahmeloch
- 47: Rastvertiefung
- 48: Rastvertiefung
- 49: Stromschiene
- 50: Abdeckelement

## Patentansprüche

1. Elektrisches Installationsgerät (1), mit einem Gehäuse (7) und mindestens einem Haken (8, 9) auf einer Rückseite des Installationsgeräts (1), wobei das Installationsgerät (1) mittels des Hakens (8, 9) an einer Sammelschiene (2) befestigbar ist, wobei der Haken (8, 9), zum Wechseln einer Abgangsseite des Installationsgeräts (1), von einer ersten Stellung in eine entgegengesetzt zu dieser angeordnete zweite Stellung verbringbar ist, sowie der Haken (8, 9) in einer Aufnahme (10, 22) gehalten und mit einer Stromschiene (38) des Installationsgeräts (1) verbindbar ist, **dadurch gekennzeichnet, dass** das Gehäuse (7) einen Kanal (35) für die Aufnahme (10, 22) aufweist, wobei die Aufnahme (10, 22), beim Einstecken in das Gehäuse (7) in die erste Stellung und beim Entnehmen aus dem Gehäuse (7) aus der ersten Stellung sowie beim Einstecken in das Gehäuse (7) in die zweite Stellung und beim Entnehmen aus dem Gehäuse (7) aus der zweiten Stellung, mittels des Kanals (35) in dessen Längsrichtung geführt ist und die Aufnahme (10, 22) in der ersten und der zweiten Stellung mittels des Kanals (35) seitlich positioniert ist, sowie die Aufnahme (10, 22) Rastmittel (20, 28) zum Rastieren mit dem Gehäuse (7) in der ersten und der zweiten Stellung in Längsrichtung des Kanals (35) aufweist, sowie die Aufnahme (10, 22) in dem mit dem Kanal (35) zusammenwirkenden Bereich ein elastisches Element (21, 32) aufweist, das in der ersten Stellung und in der zweiten Stellung den Haken (8, 9) gegen die Stromschiene (38) bewegt.

2. Elektrisches Installationsgerät nach Anspruch 1, **dadurch gekennzeichnet, dass** die Stromschiene (38) in einem mit dem Haken (8, 9) zusammenwirkenden Bereich quer zur Längserstreckung des Kanals (35) angeordnet ist.

3. Elektrisches Installationsgerät nach Anspruch 1 oder 2, **dadurch gekennzeichnet, dass** die Stromschiene (38) zumindest im Bereich des Hakens (8, 9) als Platte ausgebildet ist, wobei die Platte parallel zu einem Bodenbereich (37) des Kanals (35) angeordnet ist, wobei der Kanal (35) den Bodenbereich (37) und senkrecht zu diesem angeordnete Seitenwandungen (36) aufweist.

4. Elektrisches Installationsgerät nach einem der Ansprüche 1 bis 3, **dadurch gekennzeichnet, dass** der Haken (8, 9) einen U-förmigen Querschnitt aufweist.

5. Elektrisches Installationsgerät nach einem der Ansprüche 1 bis 4, **dadurch gekennzeichnet, dass** der Haken (8, 9) in der Aufnahme (10, 22) gelagert und in einer in die Aufnahme (10, 22) eingesetzten Stellung rastierend oder geklemmt mit der Aufnahme (10, 22) verbunden ist.

6. Elektrisches Installationsgerät nach Anspruch 4 oder 5, **dadurch gekennzeichnet, dass** der Haken (8, 9) zwei Schenkel (11, 12, 23, 24) und einen diese verbindenden Steg (13, 25) aufweist, wobei der Haken (8, 9) im Bereich des Steges (13, 25) rastierend oder geklemmt mit der Aufnahme (10, 22) verbunden ist.

7. Elektrisches Installationsgerät nach einem der Ansprüche 1 bis 6, **dadurch gekennzeichnet, dass** die Aufnahme (10, 22) beidseitig Ansätze (19, 27) aufweist, die in der ersten und der zweiten Stellung auf dem Gehäuse (7) aufliegen.

8. Elektrisches Installationsgerät nach einem der Ansprüche 1 bis 7, **dadurch gekennzeichnet, dass** die Aufnahme (10, 22) einen U-förmigen Querschnitt aufweist.

9. Elektrisches Installationsgerät nach Anspruch 8, **dadurch gekennzeichnet, dass** die Aufnahme (10, 22) zwei Schenkel (16, 17, 29, 30) und einen diese verbindenden Steg (18, 31) aufweist, wobei die beiden Schenkel (11, 12, 23, 24) der Haken (8, 9) im Bereich der beiden Schenkel (16, 17, 29, 30) der Aufnahme (10, 22) und der Steg (13, 25) des Hakens (8, 9) im Bereich des Steges (18, 31) der Aufnahme (10, 22) angeordnet ist.

10. Elektrisches Installationsgerät nach einem der Ansprüche 1 bis 9, **dadurch gekennzeichnet, dass** das elastische Element (21, 32) als biegsamer Vorsprung ausgebildet ist, der als mindestens eine Platte ausgebildet ist.

11. Elektrisches Installationsgerät nach Anspruch 10, **dadurch gekennzeichnet, dass** der biegsame Vorsprung (21, 32) mit dem Steg (18, 31) der Aufnahme (10, 22) im Bereich des Übergangs von diesem Steg (18, 31) zu dem Schenkel (16, 29) der Aufnahme (10, 22), der der Stromschiene (38) benachbart ist, verbunden ist.

12. Elektrisches Installationsgerät nach einem der Ansprüche 1 bis 11, **dadurch gekennzeichnet, dass** die Aufnahme (10, 22) aus Kunststoff besteht, insbesondere als Kunststoff-Spritzgussteil ausgebildet ist.

13. Elektrisches Installationsgerät nach einem der Ansprüche 1 bis 12, **dadurch gekennzeichnet, dass** mindestens ein Haken (9) zwei Schenkel (23, 24) und einen diesen verbindenden Steg (25) aufweist, wobei die beiden Schenkel (23, 24) einen solchen lichten Abstand voneinander aufweisen, dass eine Sammelschiene (2) definierter Dicke und die die Sammelschiene (2) kontaktierende Stromschiene (38) unter Vorspannung des Hakens (9) zwischen den beiden Schenkeln (23, 24) befestigbar ist.

14. Elektrisches Installationsgerät nach einem der Ansprüche 1 bis 13, **dadurch gekennzeichnet, dass** ein weiterer Haken (8) zwei Schenkel (11, 12) und einen diesen verbindenden Steg (13) aufweist, wobei einer der Schenkel (11) ein Durchgangsloch mit Gewinde (14) und eine in das Gewinde eingeschraubte Zustellschraube (15) zum Klemmen einer Sammelschiene (2) und der diese kontaktierenden Stromschiene (38) zwischen der Zustellschraube (15) und dem anderen Schenkel (12) des Hakens (8) aufweist.

15. Elektrisches Installationsgerät nach einem der Ansprüche 1 bis 14, **dadurch gekennzeichnet, dass** die Aufnahme (22) im Bereich eines freien Endes des Schenkels (30) der Aufnahme (22), der dem Kanal (35) abgewandt ist, ein Ausgleichselement (33) schwenkbar aufnimmt, wobei das Ausgleichselement (33) in einer ersten Schwenkstellung aus dem lichten Aufnahmebereich des Hakens (9) geschwenkt ist, zur Aufnahme der Sammelschiene (2) zwischen den Schenkeln (23, 24) des Hakens (9), und in einer zweiten Schwenkstellung in den lichten Aufnahmebereich des Hakens (9) geschwenkt und in dieser Schwenkstellung rastierend festgelegt ist, zur Aufnahme einer in der Dicke reduzierten Sammelschiene und der diese kontaktierenden Stromschiene (38) zwischen dem Ausgleichselement (33) und demjenigen Schenkel (23) des Hakens (9), der der Stromschiene (2) und dem Anschluss (38) zugewandt ist.

## Claims

1. Electrical installation device (1), having a housing (7) and at least one hook (8, 9) on a rear face of the installation device (1), wherein the installation device (1) can be fastened to a busbar (2) by means of the hook (8, 9), wherein the hook (8, 9), in order to change an output side of the installation device (1), can be moved from a first position to a second position which is arranged opposite the said first position, and the hook (8, 9) is held in a receptacle (10, 22) and can be connected to a conductor rail (38) of the installation device (1), **characterized in that** the housing (7) has a channel (35) for the receptacle (10, 22), wherein the receptacle (10, 22) is guided by means of the channel (35) in the longitudinal direction of said channel when it is inserted into the housing (7) into the first position and when it is removed from the housing (7) from the first position and when it is inserted into the housing (7) into the second position and when it is removed from the housing (7) from the second position, and the receptacle (10, 22) is laterally positioned by means of the channel (35) in the first and the second position, and the receptacle (10, 22) has latching means (20, 28) for latching with the housing (7) in the first and the second position in the longitudinal direction of the channel (35), and the receptacle (10, 22) has an elastic element (21, 32) in the region which interacts with the channel (35), the said elastic element moving the hook (8, 9) towards the conductor rail (38) in the first position and in the second position.

2. Electrical installation device according to Claim 1, **characterized in that** the conductor rail (38) is arranged transversely to the longitudinal extent of the channel (35) in a region which interacts with the hook (8, 9).

3. Electrical installation device according to Claim 1 or 2, **characterized in that** the conductor rail (38) is in the form of a plate at least in the region of the hook (8, 9), wherein the plate is arranged parallel to a bottom region (37) of the channel (35), wherein the channel (35) has the bottom region (37) and sidewalls (36) which are arranged perpendicularly to the said bottom region.

4. Electrical installation device according to one of Claims 1 to 3, **characterized in that** the hook (8, 9) has a U-shaped cross section.

5. Electrical installation device according to one of Claims 1 to 4, **characterized in that** the hook (8, 9) is mounted in the receptacle (10, 22) and is connected to the receptacle (10, 22) in a latching or clamped manner in a position in which it is inserted into the receptacle (10, 22).

6. Electrical installation device according to Claim 4 or 5, **characterized in that** the hook (8, 9) has two limbs (11, 12, 23, 24) and a crosspiece (13, 25) which connects the said limbs, wherein the hook (8, 9) is connected to the receptacle (10, 22) in a latching or clamped manner in the region of the crosspiece (13, 25).

7. Electrical installation device according to one of Claims 1 to 6, **characterized in that** the receptacle (10, 22) has shoulders (19, 27) on both sides, the said shoulders being supported on the housing (7) in the first and the second position.

8. Electrical installation device according to one of Claims 1 to 7, **characterized in that** the receptacle (10, 22) has a U-shaped cross section.

9. Electrical installation device according to Claim 8, **characterized in that** the receptacle (10, 22) has two limbs (16, 17, 29, 30) and a crosspiece (18, 31) which connects the said limbs, wherein the two limbs (11, 12, 23, 24) of the hooks (8, 9) are arranged in the region of the two limbs (16, 17, 29, 30) of the receptacle (10, 22), and the crosspiece (13, 25) of the hook (8, 9) is arranged in the region of the crosspiece (18, 31) of the receptacle (10, 22).

10. Electrical installation device according to one of Claims 1 to 9, **characterized in that** the elastic element (21, 32) is in the form of a flexible projection which is in the form of at least one plate.

11. Electrical installation device according to Claim 10, **characterized in that** the flexible projection (21, 32) is connected to the crosspiece (18, 31) of the receptacle (10, 22) in the region of the transition from the said crosspiece (18, 31) to that limb (16, 29) of the receptacle (10, 22) which is adjacent to the conductor rail (38).

12. Electrical installation device according to one of Claims 1 to 11, **characterized in that** the receptacle (10, 22) is composed of plastic, in particular is in the form of a plastic injection-moulded part.

13. Electrical installation device according to one of Claims 1 to 12, **characterized in that** at least one hook (9) has two limbs (23, 24) and a crosspiece (25) which connects the said limbs, wherein the two limbs (23, 24) are at such a clear distance from one another that a busbar (2) of defined thickness and the conductor rail (38), which makes contact with the busbar (2), are able to be fastened between the two limbs (23, 24) under prestress of the hook (9).

14. Electrical installation device according to one of Claims 1 to 13, **characterized in that** a further hook (8) has two limbs (11, 12) and a crosspiece (13) which connects the said limbs, wherein one of the limbs (11) has a passage hole with a thread (14) and has an adjusting screw (15), which is screwed into the thread, for clamping a busbar (2) and the conductor rail (38), which makes contact with the said busbar, between the adjusting screw (15) and the other limb (12) of the hook (8).

15. Electrical installation device according to one of Claims 1 to 14, **characterized in that** the receptacle (22) accommodates, in a pivotable manner, a compensation element (33) in the region of a free end of that limb (30) of the receptacle (22) which is averted from the channel (35), wherein the compensation element (33) is pivoted out of the clear receptacle region of the hook (9) in a first pivot position in order to accommodate the busbar (2) between the limbs (23, 24) of the hook (9), and is pivoted into the clear receptacle region of the hook (9) in a second pivot position and fixed in a latching manner in this pivot position in order to accommodate a busbar of reduced thickness and the conductor rail (38), which makes contact with the said busbar, between the compensation element (33) and that limb (23) of the hook (9) which faces the busbar (2) and the connection (38).

## Revendications

1. Appareil d'installation électrique (1), avec un boîtier (7) et au moins un crochet (8, 9) sur un côté arrière de l'appareil d'installation (1), dans lequel l'appareil d'installation (1) peut être fixé au moyen du crochet (8, 9) sur un rail collecteur (2), dans lequel le crochet (8, 9) peut être déplacé d'une première position à une deuxième position disposée à l'opposé de celle-ci pour changer le côté de sortie de l'appareil d'installation (1), et le crochet (8, 9) est maintenu dans un logement (10, 22) et il peut être relié à un rail de contact (38) de l'appareil d'installation (1), **caractérisé en ce que** le boîtier (7) présente un canal (35) pour le logement (10, 22), dans lequel le logement (10, 22) est guidé au moyen du canal (35), dans la direction longitudinale de celui-ci, lors de l'insertion dans le boîtier (7) dans la première position et lors de l'extraction hors du boîtier (7) hors de la première position ainsi que lors de l'insertion dans le boîtier (7) dans la deuxième position et lors de l'extraction hors du boîtier (7) hors de la deuxième position, et le logement (10, 22) est positionné latéralement dans la première et dans la deuxième position au moyen du canal (35), et le logement (10, 22) présente des moyens d'encliquetage (20, 28) pour l'encliquetage avec le boîtier (7) dans la première et la deuxième position dans la direction longitudinale du canal (35), et le logement (10, 22) présente dans la région coopérant avec le canal (35) un élément élastique (21, 32), qui dans la première et la deuxième position déplace le crochet (8, 9) contre le rail de contact (38).

2. Appareil d'installation électrique selon la revendication 1, **caractérisé en ce que** le rail de contact (38) est disposé dans une région coopérant avec le crochet (8, 9) transversalement à l'extension longitudinale du canal (35).

3. Appareil d'installation électrique selon la revendication 1 ou 2, **caractérisé en ce que** le rail de contact (38) est réalisé en forme de plaque au moins dans la région du crochet (8, 9), dans lequel la plaque est disposée parallèlement à une région de fond (37) du canal (35), dans lequel le canal (35) présente la région de fond (37) et des parois latérales (36) disposées perpendiculairement à celle-ci.

4. Appareil d'installation électrique selon l'une quelconque des revendications 1 à 3, **caractérisé en ce que** le crochet (8, 9) présente une section transversale en forme de U.

5. Appareil d'installation électrique selon l'une quelconque des revendications 1 à 4, **caractérisé en ce que** le crochet (8, 9) est placé dans le logement (10, 22) et il est assemblé au logement (10, 22) par encliquetage ou par serrage dans une position engagée dans le logement (10, 22).

6. Appareil d'installation électrique selon la revendication 4 ou 5, **caractérisé en ce que** le crochet (8, 9) présente deux branches (11, 12, 23, 24) et un pont (13, 25) reliant celles-ci, dans lequel le crochet (8, 9) est assemblé au logement (10, 22) par encliquetage ou par serrage dans la région du pont (13, 25).

7. Appareil d'installation électrique selon l'une quelconque des revendications 1 à 6, **caractérisé en ce que** le logement (10, 22) présente des saillies bilatérales (19, 27), qui reposent sur le boîtier (7) dans la première et la deuxième position.

8. Appareil d'installation électrique selon l'une quelconque des revendications 1 à 7, **caractérisé en ce que** le logement (10, 22) présente une section transversale en forme de U.

9. Appareil d'installation électrique selon la revendication 8, **caractérisé en ce que** le logement (10, 22) présente deux branches (16, 17, 29, 30) et un pont (18, 31) reliant celles-ci, dans lequel les deux branches (11, 12, 23, 24) des crochets (8, 9) sont disposées dans la région des deux branches (16, 17, 29, 30) du logement (10, 22) et le pont (13, 25) du crochet (8, 9) est disposé dans la région du pont (18, 31) du logement (10, 22).

10. Appareil d'installation électrique selon l'une quelconque des revendications 1 à 9, **caractérisé en ce que** l'élément élastique (21, 32) est réalisé en forme de saillie flexible, qui est réalisée sous la forme d'au moins une plaque.

11. Appareil d'installation électrique selon la revendication 10, **caractérisé en ce que** la saillie flexible (21, 32) est reliée au pont (18, 31) du logement (10, 22) dans la région de la transition de ce pont (18, 31) à la branche (16, 29) du logement (10, 22), qui est proche du rail de contact (38).

12. Appareil d'installation électrique selon l'une quelconque des revendications 1 à 11, **caractérisé en ce que** le logement (10, 22) se compose de matière plastique, en particulier d'une pièce en matière plastique moulée par injection.

13. Appareil d'installation électrique selon l'une quelconque des revendications 1 à 12, **caractérisé en ce qu'**au moins un crochet (9) présente deux branches (23, 24) et un pont (25) qui les relie, dans lequel les deux branches (23, 24) présentent une distance libre l'une de l'autre telle qu'un rail collecteur (2) d'épaisseur définie et le rail de contact (38) en contact avec le rail collecteur (2) puissent être fixés entre les deux branches (23, 24) avec précontrainte du crochet (9).

14. Appareil d'installation électrique selon l'une quelconque des revendications 1 à 13, **caractérisé en ce qu'**un autre crochet (8) présente deux branches (11, 12) et un pont (13) qui les relie, dans lequel une des branches (11) présente un trou traversant avec un filet (14) et une vis de serrage (15) vissée dans le filet pour le serrage d'un rail collecteur (2) et du rail de contact (38) en contact avec celui-ci entre la vis de serrage (15) et l'autre branche (12) du crochet (8).

15. Appareil d'installation électrique selon l'une quelconque des revendications 1 à 14, **caractérisé en ce que** le logement (22) contient de façon pivotante, dans la région d'une extrémité libre de la branche (30) du logement (22), qui est orientée à l'opposé du canal (35), un élément de compensation (33), dans lequel l'élément de compensation (33) pivote dans une première position de pivotement hors de la région de logement libre du crochet (9) pour recevoir le rail collecteur (2) entre les branches (23, 24) du crochet (9), et pivote dans une deuxième position de pivotement dans la région de logement libre du crochet (9) et est bloqué par encliquetage dans cette position de pivotement pour recevoir un rail collecteur d'épaisseur réduite et le rail de contact (38) en contact avec celui-ci entre l'élément de compensation (33) et la branche (23) du crochet (9), qui est orientée vers le rail de contact (2) et le raccord (38).
